(19) **Europäisches Patentamt**
**European Patent Office**
**Office européen des brevets**

(11) Veröffentlichungsnummer : **0 081 656 B2**

(12) # NEUE EUROPÄISCHE PATENTSCHRIFT

(45) Veröffentlichungstag der neuen Patentschrift :
**20.02.91 Patentblatt 91/08**

(51) Int. Cl.⁵ : **B62D 25/14, B62D 65/00, B60K 26/00, B60K 37/00**

(21) Anmeldenummer : **82109603.9**

(22) Anmeldetag : **18.10.82**

(54) **Baueinheit für den Cockpit-Bereich von Fahrzeugen, insbesondere Kraftfahrzeugen, Verfahren zur Herstellung und zum Einbau einer solchen Baueinheit sowie Vorrichtung zur Durchführung des Verfahrens.**

(30) Priorität : **11.12.81 DE 3149083**

(43) Veröffentlichungstag der Anmeldung :
**22.06.83 Patentblatt 83/25**

(45) Bekanntmachung des Hinweises auf die
Patenterteilung :
**24.02.88 Patentblatt 88/08**

(45) Bekanntmachung des Hinweises auf die
Entscheidung über den Einspruch :
**20.02.91 Patentblatt 91/08**

(84) Benannte Vertragsstaaten :
**DE FR GB IT SE**

(56) Entgegenhaltungen :
EP-A- 0 124 093
DE-A- 2 923 874
DE-A- 3 001 274
DE-A- 3 119 572

(56) Entgegenhaltungen :
DE-B- 2 324 393
DE-C- 941 173
DE-C- 944 350
DE-U- 8 024 416
FR-A- 2 303 698
US-A- 4 126 202

(73) Patentinhaber : **Adam Opel Aktiengesellschaft
Bahnhofsplatz 1 Postfach 1560
D-6090 Rüsselsheim (DE)**

(72) Erfinder : **Köchy, Fritz B. Ing. grad.
Schlesische Strasse 24
D-6500 Mainz (DE)**
Erfinder : **Brandel, Klaus
Kl.-Albanus-Strasse 3
D-6501 Wörrstadt (DE)**

(74) Vertreter : **Rosenfeld, Jürgen, Dipl. Ing. et al
Adam Opel Ag Patentabteilung Bahnhofsplatz
1 Postfach 17 10
D-6090 Rüsselsheim (DE)**

EP 0 081 656 B2

## Beschreibung

Die Erfindung bezieht sich auf eine vormontierte Baueinheit nach dem Oberbegriff des Patentanspruchs 1.

Bei der Herstellung von Kraftfahrzeugen besteht zunehmend das Bestreben, einzelne Teile nicht mehr separat zu montieren, sondern mehrere Teile zu vormontierten Baugruppen zusammenzufassen und diese größere Baueinheiten dann im Fahrzeug einzubauen. Hierdurch können Verbesserungen und Erleichterungen der Arbeitsbedingungen und Montageoperationen erreicht werden. Sinn und Zweck des Einbaus vormontierter Baueinheiten in Kraftfahrzeug-Karosserien liegen hierbei in erster Linie in einer möglichst rationellen und damit schnellen und kostensparenden sowie einfach auszuführenden Serienfertigung des betreffenden Kraftfahrzeuges.

Durch die US-A-4 126 202 gehört das Prinzip des Einbaus vormontierter Baueinheiten für den Cockpit-Bereich von Kraftfahrzeugen bereits zum Stand der Technik. Die bekannte Baueinheit umfaßt die Armaturentafel, einschließlich aller Einbauten, die Lenkung mit Lenkrad, das Gaspedal sowie weitere Pedale für Bremse etc. Alle genannten Bestandteile der Baueinheit sind starr an einem gehäuseförmigen Teil befestigt, das flächenmäßig fast die ganze Stirnwand bildet.

Ein wesentlicher Nachteil der bekannten Anordnung nach US-A-4 126 202 besteht darin, daß nach der Befestigung des Moduls an der Stirnwand oder am Rahmen des Fahrzeugs die verschiedenen Steuerglieder mit den zu steuernden Geräten verbunden werden müssen. Dabei müssen die verschiedenen Kabel von den Hebeln und Pedalen durch die Bodenwand des Moduls hindurchgeführt werden. Nachteilig ist bei dem bekannten Gegenstand weiterhin, daß in aufwendiger Weise alle Bestandteile der Baueinheit mittels eines Rahmens oder Gehäuses verbunden werden müssen, an dem die Durchführungen bei der Vormontage vorgenommen werden könnten. Dies wäre sowohl sehr aufwendig als auch mit Schwierigkeiten bei der Montage verbunden. Bei der bekannten Baueinheit nach US-A-4 126 202 müssen also bei und nach der Montage Befestigungs- und Durchführungsarbeiten im Fahrgastraum ausgeführt werden.

Aus der DE-A-941 173 ist eine Anordnung zur Lagerung von Bedienungsorganen für Kraftfahrzeuge mit Lenkradschaltung und hängend angeordnetem Kupplungs-, Brems- und Gasfußhebel bekannt, bei der sowohl Betätigungs- als auch Schaltorgane, wie Kupplungs-, Brems- und Gasfußhebel sowie Teile der Handbremse gemeinsam an einer einzigen Aufnahmeplatte angebracht sind, die als vorgefertigte Baueinheit an der vorderen Spritzwand des Fahrzeuges befestigt wird. Zwischen den verschiedenen Armaturen und Aggregaten des Fahrzeugs sind insbesondere Steckverbindugnen für Kabel und Bowdenzüge vorgesehen, die in konventioneller Montage durchgeführt werden müssen.

Aus der DE-A-2 324 393 ist eine Anlage zur Montage von Kraftfahrzeugen oder Teilen eines Kraftfahrzeuges bekannt, wobei ein mit einem Motorantrieb versehener Transportwagen dazu dient, vorgefertigte Baueinheiten oder Teile desselben zu transportieren, die bereits an einem Band vormontiert worden sind.

Aufgabe der vorliegenden Erfindung ist es, den durch Zusammenfassung von Einzelteilen in vormontierten Baueinheiten zu erzielenden Rationalisierungs- und Verbesserungseffekt für den Cockpit-Bereich von Fahrzeugen, insbesondere Kraftfahrzeugen zu optimieren.

Die erfindungsgemäße Lösung dieser Aufgabe besteht, soweit es um den gegenständlichen Teil der Gesamterfindung geht, in den im kennzeichnenden Teil des Patentanspruchs 1 angegebenen Merkmalen.

Wesentliche Merkmale der Erfindung sind hierbei die sogenannte Schließplatte und die Zusammenfassung und Fixierung dieser Schließplatte mit den anderen Bestandteilen der Baueinheit auf einem Montagerahmen. Die Schließplatte stellt dabei lediglich ein kleines Teil der Karosserie-Stirnwand dar, und es handelt sich bei der Schließplatte um den Abschnitt, an dem oder in dessen Nähe die Durchtritte für die Lenkung, das Bremssystem, die Gas- und Kupplungsbetätigung üblicherweise vorgesehen sind. Erfindungsgemäß werden nun alle diese Durchtritte (wobei noch andere Durchtritte, z.B. Kabeldurchtritte, die Durchführungsarbeiten vom Fahrgastraum aus erforderlich machen würden, dazu kommen) auf diesen Abschnitt, nämlich auf die Schließplatte, konzentriert. Da die Schließplatte zusammen mit den anderen Bestandteilen der Baueinheit auf einem Montagerahmen zusammengefaßt und fixiert wird, können nun die Durchführungsarbeiten an der Schließplatte bereits bei der Vormontage der Baueinheit ausgeführt werden, so daß beim Einbau der Baueinheit die Schließplatte lediglich an der Stirnwand unter Abschluß der entsprechenden Öffnung verschraubt zu werden braucht. Vorzugsweise werden mit den betreffenden vom Motorraum aus zugänglichen Schrauben gleichzeitig die Pedalböcke mit angeschraubt.

Eine Schließplatte, an der Pedale und die damit verbundenen Einrichtungen vormontiert sind, ist zwar durch die DE-OS 30 01 274 an sich bekannt. Dadurch ist es möglich, die Herstellung zahlreicher Verbindungen und die erforderlichen Einstellarbeiten als Werkbankarbeiten auszuführen. Im einzelnen bildet die bekannte Schließplatte nach DE-OS 30 01 274 im vormontierten Zustand eine starre Einheit mit einer Grundplatte, den Pedalböcken sowie den Pedalen und weiteren Einrichtungen. Kupplungs-und Bremspedal werden hydraulisch und pneumatisch betätigt, also ohne Bowdenzüge, die durch die Grundplatte hindurchführen. Diese Baueinheit wird manuell an die Stirnwand montiert. In der DE-OS findet sich kein Hinweis über eine automatische Montage. Eine automatische Montage dieser gezeigten Baugruppe wäre nur denkbar mit hydraulisch oder pneumatisch gesteuerten Kupplungs- und Bremspedalen und ohne elektrische Leitungen und Bowdenzüge. Im Gegensatz zum Gegenstand der vorliegenden Anmeldung stellt die Anordnung nach der DE-OS 30 01 274 eine vormontierte Pedalbaugruppe dar, die vollkommen unabhängig vom Armaturenbrett ist und als solche auch unabhängig davon eingebaut werden kann. Schon von daher besteht für den Fachmann keinerlei Veranlassung, eine solche Pedalbaugruppe mit einer vormontierten Baueinheit für das Armaturenbrett, einschließlich aller Einbauten, zu vereinigen. Schon gar nicht wird der Fachmann auf die Idee kommen, eine nur ähnliche Pedalbaugruppe in losem Verbund mit weiteren Bestandteilen der Baueinheit für eine Armaturentafel mit Anbauten auf einem Montagerahmen zusammenzufassen und zu fixieren. Der grundlegende Unterschied der vorliegenden Erfindung zum Gegenstand der DE-OS 30 01 274 besteht somit - zusammengefaßt -darin, daß durch die erfindungsgemäße Schließplatte eine Druckstange des Bremspedals und ferner Bowdenzüge und Kabel hindurchgeführt werden, und zwar in einer solchen Weise, daß eine automatische Montage der Schließplatte möglich ist Wesentliches Element bei der praktischen Verwirklichung der erfindungsgemäßen Baueinheit ist nach alledem die in Rede stehende Stirnwand-Schließplatte, auf der zweckmäßigerweise eine Formdichtung zur Abdichtung einer in der Stirnwand der Karosserie vorgesehenen Öffnung aufgeklebt ist, und die alle Durchtritte der Bowdenzüge zur Betätigung von Gas, Kupplung, Choke, Tachowelle, Leuchtweitenregler und Econometer, ferner einen Durchtritt für den Hauptkabelsatz, ferner eine Öffnung für das Bremssystem sowie einen Lenkungsdurchtritt aufweist.

Vorteilhafte Ausgestaltungen dieses Grundgedankens sind den Patentansprüchen 2 bis 4 zu entnehmen.

Die Erfindung besteht des weiteren in einem Verfahren zur Herstellung und zum Einbau der erfindungsgemäßen Baueinheit und zeichnet sich durch die im Patentanspruch 5 angegebenen Verfahrensmerkmale aus.

Das erfindungsgemäße Verfahren unter Verwendung eines Montagerahmens ermöglicht vorteilhafterweise eine Vormontage der Baueinheit unter Vermeidung aufwendiger Versteifungen und Befestigungen innerhalb der Baueinheit und gewährleistet darüber hinaus die erforderliche Service-Fähigkeit der in der Baueinheit zusammengefaßten Aggregate nach modernstem Stand. Der Montagerahmen bietet, insbesondere wenn er drehbar angeordnet ist, den besonderen Vorteil einer außerordentlich guten Zugänglichkeit der Baueinheit bei deren Vormontage. Als vorteilhaft hervorzuheben ist insbesondere die Tatsache, daß aufgrund der Maßnahmen im Zusammenhang mit der Schließplatte und deren Verschraubung nach der Montage der Baueinheit keinerlei Befestigungsund Durchführungsarbeiten im Fahrgastraum vorgenommen werden müssen.

Die Patentansprüche 6 bis 9 enthalten Ausgestaltungen und weitere Vorteile des verfahrensmäßigen Teils der Erfindung.

Gegenstand der Erfindung ist schließlich auch eine Vorrichtung zur Durchführung des erfindungsgemäßen Verfahrens, die durch die Merkmale des Patentanspruchs gekennzeichnet ist.

Die Vorteile des erfindungsgemäßen Montagerahmens liegen insbesondere in seiner dreh- und schwenkbaren Lagerung, die dem Zwecke einer möglichst bequemen Vormontage der Baueinheit und - wenn diese dann in die Karosserie eingefahren ist - einer Justierung in die richtige Montagestellung innerhalb der Karosserie dient bzw. zugute kommt.

Weitere Vorteile und Einzelheiten des auf eine "Vorrichtung zur Durchführung des erfindungsgemäßen Verfahrens" gerichteten Teils der Erfindung gehen aus den Patentansprüchen 11 bis 13 hervor.

Die Erfindung ist insgesamt anhand von Ausführungsbeispielen in der Zeichnung veranschaulicht, die nachstehend im einzelnen beschrieben werden. In der Zeichnung zeigt :

Fig. 1 eine perspektivische Ansicht eines als vormontierte Baueinheit ausgebildeten Pkw-Cockpits, kurz vor der Endmontage,

Fig. 2 das Pkw-Cockpit nach Fig. 1, vor dem Einbau in die Karosserie, in vormontiertem Zustand auf einem Montagerahmen angeordnet, in perspektivischer Ansicht von der Motorraumseite her,

Fig. 3 eine Pkw-Karosserie mit soeben eingesetzter Cockpit-Baueinheit, von der Motorraumseite her mit Blick auf die Karosserie-Stirnwand gesehen,

Fig. 4 eine Ausführungsform eines auf einer Einfahr-Schablone angeordneten Montagerahmens, wie er bei den Gegenständen der Fig. 2 und 3 Verwendung findet in perspektivischer Separatdarstellung,

Fig. 5 - ebenfalls in perspektivischer Darstellung - mehrere Stationen (Fig. 5a-Fig. 5c) während der Vormontage der das Cockpit bildenden Baueinheit, und

Fig. 6 die Baueinheit nach Fig. 5 während des seitlichen Einfahrens in eine Pkw-Karosserie.

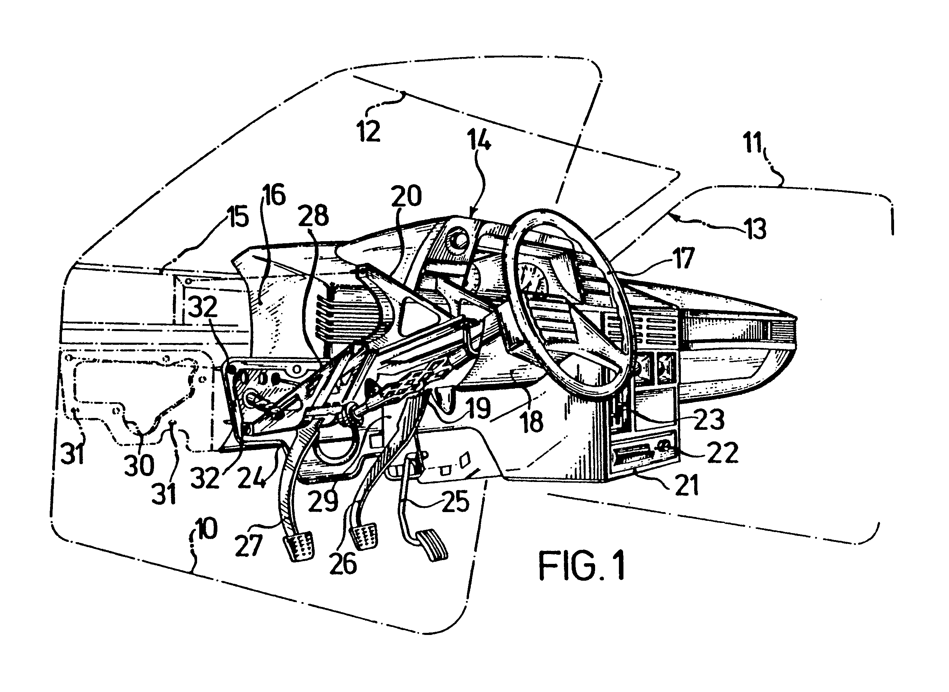

In Fig. 1 bezeichnet 10 und 11 die Seitentüröffnungen und 12 die Frontscheibenöffnung einer insgesamt mit 13 bezifferten Karosserie eines Personenkraftfahrzeuges. Das sich bereits im Innenraum der Karosserie 13 befindliche, als vormontierte Baueinheit ausgebildete Cockpit des Fahrzeugs ist in Fig. 1 durch eine dicke, ausgezogene Umrandung kenntlich gemacht und insgesamt mit 14 bezeichnet. Fig. 1 veranschaulicht die Einbausituation des Cockpits 14 kurz vor dessen Endmontage an der in dünnen Linien angedeuteten und mit 15 bezifferten Karosserie-Stirnwand.

Das in Fig. 1 in Ansicht schräg von vorn gezeigte Cockpit 14 besteht im einzelnen aus der mit 16 bezifferten Armaturentafel, einschließlich aller Einbauten, der Lenkung mit Lenkrad 17, Lenkradverkleidung 18, Sicherheitslenksäule 19, Lenkungshalter 20, Konsole 21 mit eingebautem Radio 22 sowie Heizungs- und Lüftungsbetätigung 23. Weiterhin umfaßt das als Baueinheit ausgebildete Cockpit 14 eine Stirnwand-Schließplatte 24, auf der die Pedale 25, 26 und 27 für Gas, Bremse und Kupplung gelagert sind. Die Pedalböcke sind hierbei mit 28 bzw. 29 bezeichnet. Sie stehen im losen Verbund mit dem Lenkungshalter 20. Durch die Stirnwand-Schließplatte 24 wird bei der Endmontage des Cockpits 14 an der Karosserie-Stirnwand 15 eine dort befindliche und mit 30 bezeichnete Stirnwand-Öffnung dichtend geschlossen. Hierzu dienen die Stirnwand-Öffnung 30 umgebende Schraubenlöcher 31, die mit Schrauben 32 in der Stirnwand-Schließplatte 24 zusammenwirken.

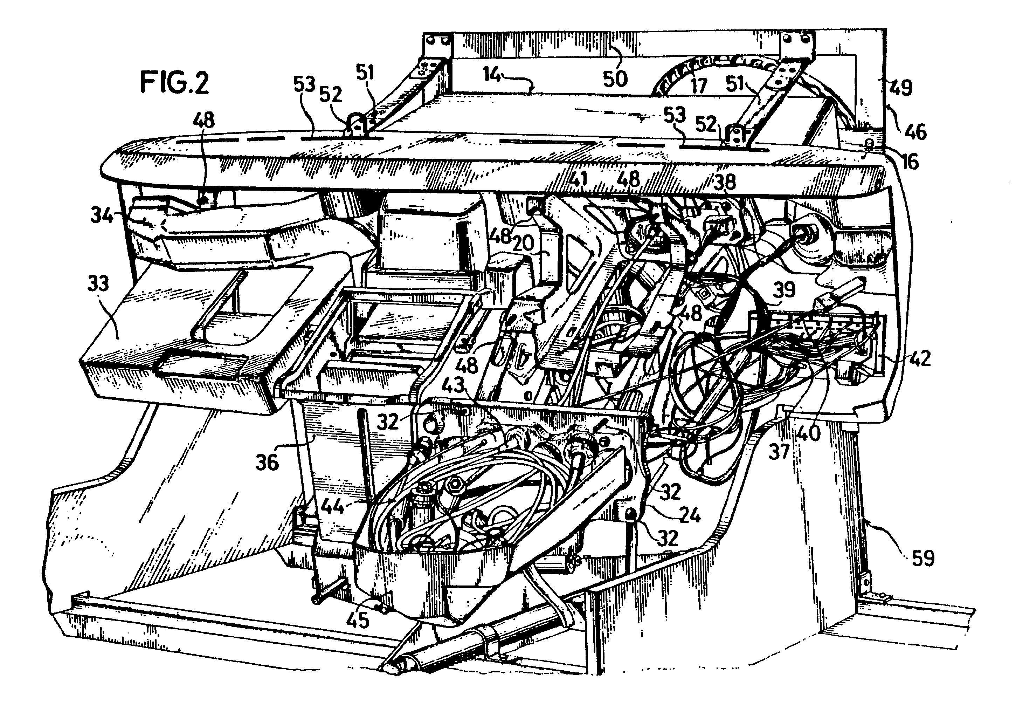

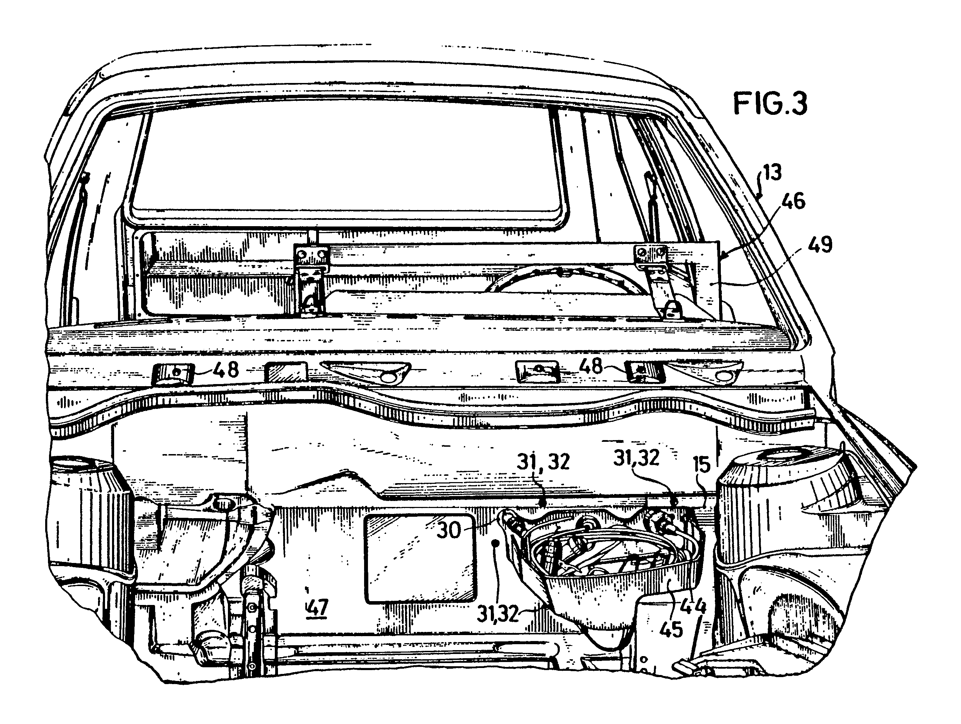

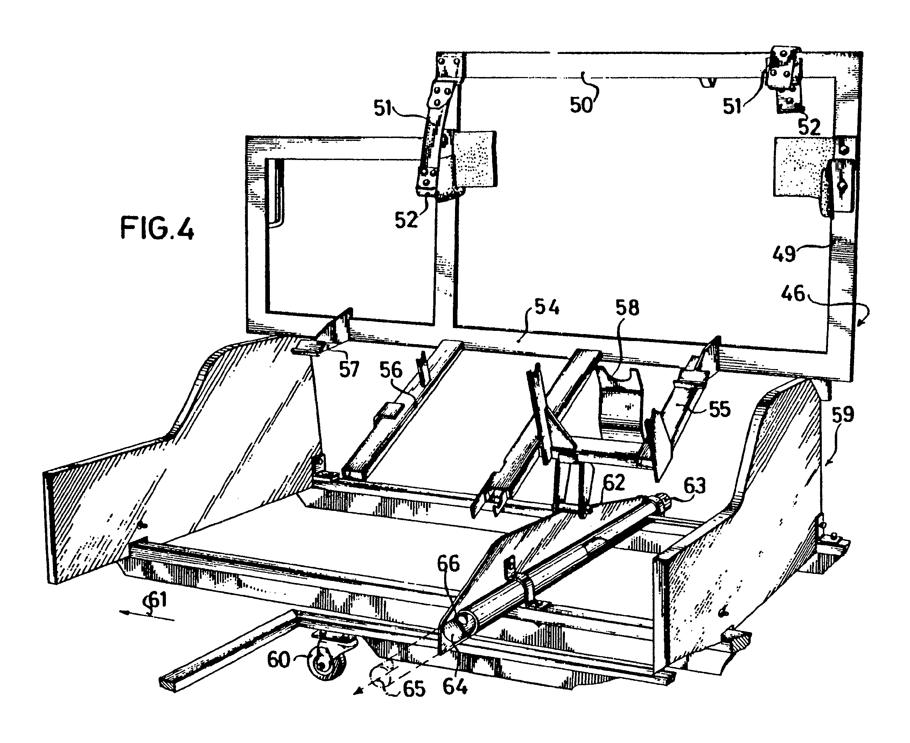

Weitere, in der Cockpit-Baueinheit 14 integrierte Bestandteile sind aus Fig. 2 ersichtlich, die das Cockpit 14 von der Rückseite her zeigt. Es bezeichnet 33 den Handschuhkasten, 34 einen Lüftungskanal und 36 den Heizungsschacht des Fahrzeuges. Außerdem ist aus Fig. 2 erkennbar, daß an sämtliche Einbauten der Cockpit-Baueinheit 14 die betreffenden Bowdenzugkabel bzw. elektrischen Kabel angeschlossen sind. Elektrische Kabelstränge, die z. T. zu Bündeln zusammengefaßt sind, sind in Fig. 2 mit 37, 38 und 39 beziffert. Weitere Kabel tragen die Bezugszeichen 40 bzw. 41. Der Sicherungskasten, von dem das Kabelbündel 37 ausgeht, ist mit 42 bezeichnet. Die elektrischen Kabel, z. B. 37, 38, 39, sowie auch die Bowdenzugkabel, z. B. 40, 41, sind an den einzelnen Armaturentafel-Anbauteilen angeschlossen und werden mit handelsüblichen Dichtungstüllen 43 durch die Stirnwand-Schließplatte 24 hindurchgeführt. Die motorraumseitig aus der Stirnwand-Schließplatte 24 heraustretenden Kabel (in Fig. 2 insgesamt mit 44 bezeichnet) sind zusammengerollt in einer Kabelbox 45 angeordnet. Die Kabelbox 45 ist an einem insgesamt mit 46 bezeichneten Montagerahmen (vgl. hierzu insbes. auch Fig. 4) befestigt und wird nach abgeschlossener Endmontage der Baueinheit 14 entfernt. Anschließend befinden sich die Kabel 44 im Motorraum 47 des Fahrzeuges (vgl. hierzu auch Fig. 3).

Aus Fig. 2 sind des weiteren die bereits oben erwähnten Befestigungsschrauben 32 ersichtlich, die mit den Bohrungen 31 in der Karosserie-Stirnwand 15 kooperieren (vgl. hierzu ebenfalls Fig. 3). Das Lochbild der Stirnwand-Schließplatte 24 stimmt also mit dem Lochbild der zugeordneten Öffnung 30 in der Stirnwand 15 überein. Aus Fig. 2 sind weitere Befestigungsschrauben erkennbar, die zur Endmontage der Cockpit-Baueinheit 14 an der Karosserie-Stirnwand 15 dienen und mit 48 bezeichnet sind. Sämtliche Befestigungsschrauben 32, 48 sind parallel zueinander in Montagerichtung der Baueinheit 14, also in Fahrzeuglängsrichtung, ausgerichtet.

Die im Vorstehenden beschriebene und im wesentlichen aus Fig. 1 und 2 hervorgehende Cockpit-Baueinheit 14 wird vor dem endgültigen Einbau in die Fahrzeugkarosserie 13 außerhalb derselben auf einem Montagerahmen vormontiert. Eine Ausführungsform eines solchen Montagerahmens ist aus Fig. 4 ersichtlich und dort mit 46 bezeichnet. Der Montagerahmen 46 besteht im wesentlichen aus einem rechteckigen Rahmenteil 49, welches, wie Fig. 2 und 3 erkennen lassen, die Armaturentafel 16 an deren Vorderseite übergreift. An einem oberen, sich horizontal oberhalb der Armaturentafel 16 erstreckenden Teil 50 des Montagerahmens 46 sind laschenartige Befestigungselemente 51 angebracht, an deren freien Enden sich Hakenteile 52 befinden. Mit den hakenförmigen Teilen 52 greifen die befestigungselemente, wie Fig. 2 zeigt, in schlitzförmige Öffnungen 53 an der Oberseite der Armaturentafel 16 ein. An einem unteren, ebenfalls horizontal verlaufenden Rahmenteil 54 des Montagerahmens 46 sind Stützelemente 55, 56 und 57 befestigt, mit denen der Montagerahmen 46 die Baueinheit 14 untergreift. Das Teil 55 dient hierbei zur Fixierung und Halterung der Stirnwand-Schließplatte 24. Die Lenksäule 19 (vgl. Fig. 1) stützt sich bei 58 an dem Montagerahmen 46 ab.

Wie Fig. 4 weiterhin zeigt, ist der Montagerahmen 46 auf einer insgesamt mit 59 bezeichneten Einfahrschablone angeordnet. Die Einfahrschablone 59 ist auf Rollen 60 gelagert und mittels dieser in Pfeilrichtung 61, d. h. in Fahrzeugquerrichtung, verfahrbar. Die Einfahrschablone 59 dient hierbei zum seitlichen Einfahren der Cockpit-Baueinheit 14 in die Fahrzeugkarosserie 13, und zwar in die aus Fig. 1 ersichtliche Position. Der Montagerahmen 46 greift bei 62 an der Einfahrschablone 59 gelenkig an. Die Lagerung 62 ermöglicht eine Verschwenkung des Montagerahmens 46 um eine in Fahrzeugquerrichtung 61 gerichtete Horizontalachse. Hierdurch wird eine gute Zugänglichkeit der einzehen Bestandteile der Cockpit-Baueinheit 14 bei deren Vormontage ermöglicht.

Nach dem Einfahren der vormontierten Baueinheit 14 in die aus Fig. 1 ersichtliche Stellung muß die Baueinheit nochmals, und zwar in diesem Fall um eine zur Einfahrrichtung 61 um 90° gedrehte Richtung, d. h. in Fahrzeuglängsrichtung, verfahren werden, um die Endmontage an der Karosserie-Stirnwand 15 zu ermöglichen. Um die Baueinheit 14 bei diesem letzten Verfahrweg in Fahrzeuglängsichtung zu unterstützen, ist an der Einfahrschablone 59 ein Rohrteil 63 befestigt, in dem eine Führungsstange 64 in Pfeilrichtung 65, d. h. in Fahrzeuglängsrichtung, verschiebbar angeordnet ist. Die Führungsstange 64 besitzt an ihrer Oberseite eine Einkerbung 66, in die ein entsprechend geformtes Teil der Baueinheit 14, z. B. die Stirnwand-Schließplatte 24, eingreifen kann. Die vordere Endposition der Führungsstange 64, die zugleich die Endmontageposition der Baueinheit 14 kennzeichnet, ist durch strichpunktierte Linien in Fig. 4 angedeutet.

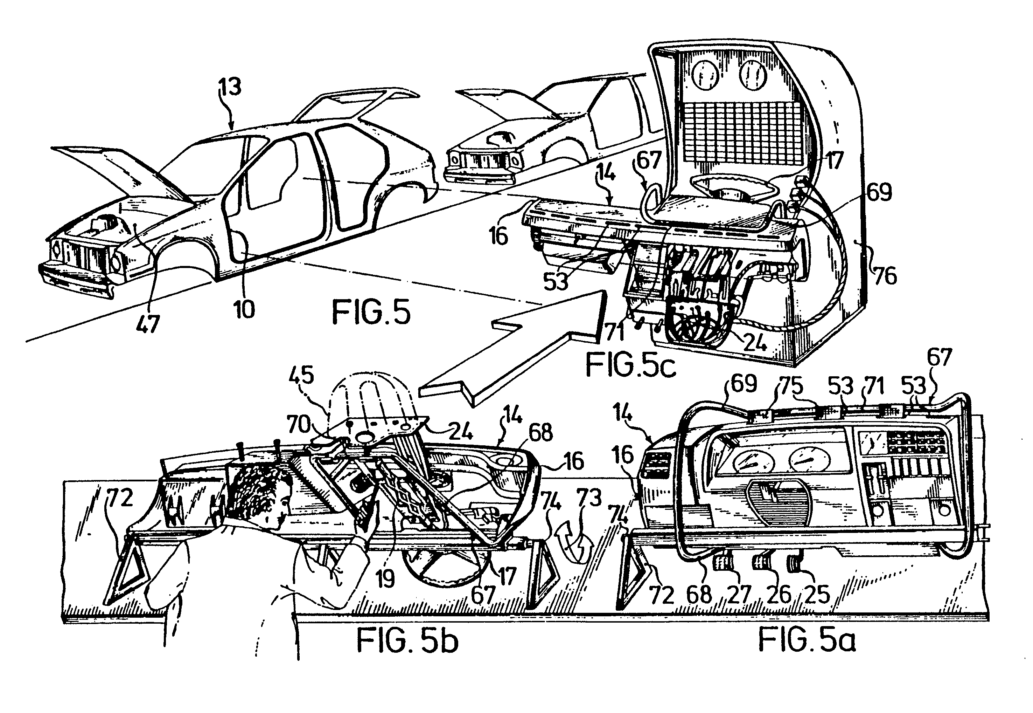

Fig. 5 zeigt nun unter anderem (in drei verschiedenen Ansichten gemäß Fig. 5a, Fig. 5b und Fig. 5c) eine andere Ausführungsform eines Montagerahmens zur Vormontage der Baueinheit 14. Die aus Fig. 5 ersichtliche Ausführungsform des dort mit 67 bezeichneten Montagerahmens besteht aus einem bügelartig verformten, in Seitenansicht etwa U-förmig gebogenen geschlossenen Rohr. Hierbei ist, wie Fig. 5b zeigt, der die Armaturentafel 16 im Bereich der Lenkung 19 und der Schließplatte 24 untergreifende U-Schenkel 68 des Montagerahmens 67 länger ausgebildet als der die Armaturentafel 16 übergreifende U-Schenkel 69 (vgl. hierzu Fig. 5c). Die beiden U-Schenkel 68 und 69 des Montagerahmens 67 bestehen jeweils aus zwei etwa parallel zueinander gerichteten Rohrteilen, die jeweils durch ein parallel zur Armaturentafelebene gerichtetes Rohrteil 70 bzw. 71 miteinander verbunden sind.

Fig. 5 macht weiterhin deutlich, daß der Montagerahmen 67 insgesamt an einem Lagerbock 72 in Pfeilrichtung 73 um eine in Richtung der Armaturentafel 16 gerichtete Horizontalachse 74 schwenkbar gelagert ist. Hierdurch ist eine gute Zugänglichkeit der in der Baueinheit 14 vereinigten Einzelteile bei deren Montage möglich (vgl. hierzu insbes. Fig. 5b).

Die in Fig. 5 mit Fig. 5a, Fig. 5b und Fig. 5c bezeichneten Teilfiguren veranschaulichen nun einige Stationen während der Vormontage der in Rede stehenden Baueinheit 14. Fig. 5a zeigt die Baueinheit 14 mit Blick von vorn auf die Armaturentafel 16, wobei die Lenkung noch nicht eingebaut ist. Die Halterung der Baueinheit 14 an dem Montagerahmen 67 erfolgt - ähnlich wie bei der Ausführungsform nach Fig. 2-4 - mittels Befestigungselementen 75, die an dem oberen horizontal gerichteten Rahmenteil 71 befestigt sind und in Schlitze 53 an der Oberseite der Armaturentafel 16 eingreifen.

Fig. 5b zeigt die Baueinheit 14 von der Rückseite her, zu welchem Zweck der Montagerahmen 67 um einen Winkel von über 180° in Pfeilrichtung 73 gedreht worden ist. In dem in Fig. 5b veranschaulichten Vormontagestadium ist bereits die Lenkung 17, 19 eingebaut.

Fig. 5c zeigt schließlich die fertig vormontierte Baueinheit 14, welche vor dem Einfahren in die Fahrzeugkarosserie 13 an einem mit 76 bezifferten Diagnose-Center noch einmal auf die Funktionsfähigkeit ihrer Teile, insbesondere der elektrischen Teile, überprüft wird.

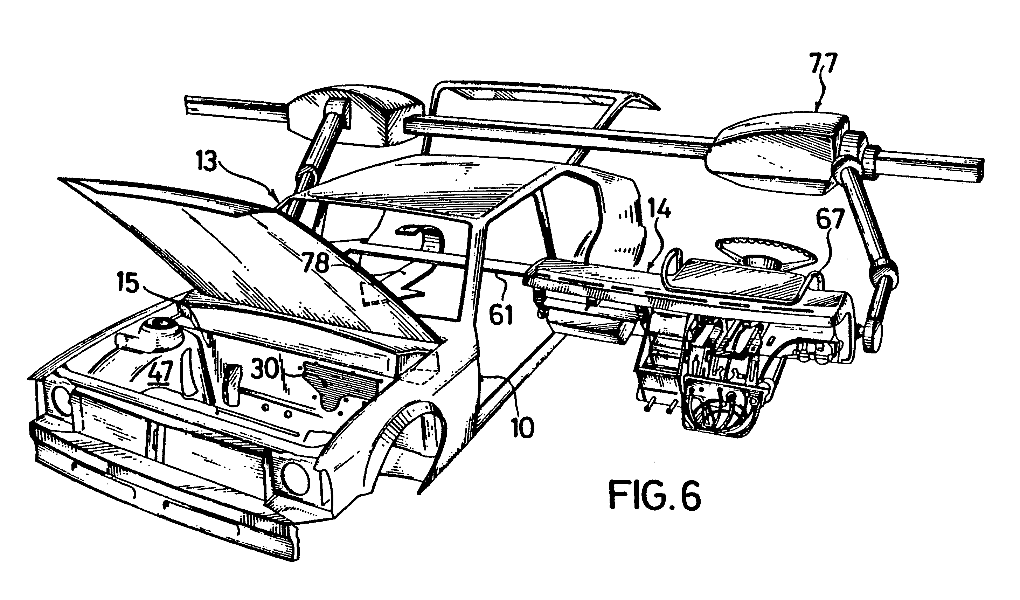

Anschließend wird die Baueinheit 14, wie Fig. 6 zeigt, einschließlich ihres Montagerahmens 67, mittels einer Roboter-Automatik 77 in Pfeilrichtung 61 in die Fahrzeugkarosserie 13 eingefahren. Zwecks Endmontage an der Karosserie-Stirnwand 15 erfolgt anschließend noch eine geringfügige Schwenkbewegung der Baueinheit 14, einschließlich Montagerahmen 67, in Pfeilrichtung 78. Danach kann die Verschraubung der Baueinheit 14 mit der Karosserie-Stirnwand 15 erfolgen. Anschließend wird der Montagerahmen 67 von der Baueinheit gelöst und wieder aus der Karosserie 13 herausgefahren.

## Ansprüche

1. Vormontierte Baueinheit für den Cockpit-Bereich von Fahrzeugen, insbesondere Kraftfahrzeugen, die innerhalb der Karosserie (13) des Fahrzeuges montierbar ist und im wesentlichen eine Armaturentafel (16), einschließlich aller Einbauten (21, 22, 23, 33, 34, 36) und elektrischer Verkabelung (37, 38, 39), Heizung mit Betätigung und Luftverteilungssystem (23), ferner eine Lenkung mit Lenkrad (17), Lenkradverkleidung (18) und Lenkungshalter (20), sowie Pedale (25, 26, 27) für Kupplung, Bremse und Gas mit Pedalböcken (28, 29) enthält, dadurch gekennzeichnet daß die Baueinheit (14) mit einer Schließplatte (24) versehen ist, die eine in der Stirnwand (15) der Karosserie (13) vorgesehene Öffnung (30) nach dem Einbau der Baueinheit (14) abschließt, und die Durchtritte für Bowdenzüge (40, 41), Kabelsätze (37, 38. 39) und dergleichen, sowie Öffnungen für das Bremssystem und den Lenkungsdurchtritt aufweist und daß die Schließplatte (24) und die Bestandteile (16, 20, 28, 36) der Baueinheit (14) vor dem Einbau auf einem Montagerahmen (46, 67) zusammengefaßt und fixiert sind.

2. Baueinheit nach Anspruch 1, dadurch gekennzeichnet, daß in das Lochbild der Schließplatte (24), das dem Lochbild der zugeordneten Öffnung (30) in der Stirnwand (15) entspricht, Schweißschrauben (32) zur Befestigung der Pedalböcke (28, 29) integriert sind, die gleichzeitig zur Befestigung der Schließplatte 24 an der Stirnwand 15 dienen.

3. Baueinheit nach Anspruch 1 und 2 dadurch gekennzeichnet, daß die Bowdenzugkabel (40, 41) und die elektrischen kabel (37, 38, 39) an den einzelnen Bestandteilen angeschlossen und mit Dichtungstüllen (43) durch die Schließplatte (24) hindurchgeführt sind.

4. Baueinheit nach Anspruch 1 bis 3, dadurch gekennzeichnet, daß vor der Schließplatte (24) am Montagerahmen (46, 47) eine abnehmbare Kabelbox (45) angebracht ist, in die die Kabel (40, 44) zusammengerollt eingelegt sind und die nach dem Einfahren der Baueinheit (14) entfernt wird.

5. Verfahren zur Herstellung und zum Einbau der Baueinheit nach Anspruch 1 bis 4, dadurch gekennzeichnet, daß die Bestandteile (16, 20, 28, 36, 24) der Baueinheit (14) auf einer Vormontagelinie mittels eines, vorzugsweise drehbar angeordneten Montagerahmens (46, 67) zusammengefaßt und zueinanderfixiert werden und daß die Baueinheit anschließend durch eine der vorderen Seitentüröffnungen (10, 11) der Karosserie (13) in den Fahrgastraum eingefahren und mit der Stirnwand (15) verschraubt wird, derart, daß eine in der Stirnwand (15) vorgesehene Öffnung (30) durch eine in die Baueinheit integrierte vormontierte Schließplatte (24) durch Verschraubung geschlossen wird, wobei alle Schrauben (32, 48) in Fahrzeuglängsrichtung gerichtet sind und die Verschraubung der Baueinheit (14) mit der Stirnwand (15) vom Motorraum (47) her erfolgt.

6. Verfahren nach Anspruch 5, dadurch gekennzeichnet, daß das Einfahren der Baueinheit (14) in die Karosserie (13) von Hand mittels einer Einfahrschablone (59) oder automatisch durch eine Roboter-Automatik (77) erfolgt

7. Verfahren nach Anspruch 6, dadurch gekennzeichnet, daß in der Schließplatte (24) alle Stirnwanddurchgänge, wie elektrische Kabel (37, 38, 39, 44), Bowdenzüge (40, 41), Leitungen und dergleichen, vormontiert und gegenüber der Schließplatte abgedichtet werden, wobei die der Armaturentafel (16) zugeordneten elektrischen Kabel (38, 39, 44) und Bowdenzüge (40, 41) mittels Dichtungstüllen (43) durch die Schließplatte (24) hindurchgeführt werden, und daß die Schließplatte im Zuge der Vormontage der Baueinheit (14) zur Halterüng der Pedalböcke (28, 29) mit Pedalen (26, 27, 25) dient.

8. Verfahren nach Anspruch 6 und 7, dadurch gekennzeichnet, daß die aus der Schließplatte (24) austretenden elektrischen Kabel (44) und Bowdenzugkabel (40) zusammengerollt in eine am Montagerahmen (46) befestigte Kabelbox (45) gelegt werden und daß nach dem Einfahren der Baueinheit (14) in die Karosserie (13) die Kabelbox entfernt wird.

9. Verfahren nach einem der Ansprüche 6 bis 8 dadurch gekennzeichnet, daß vor dem Einbau der am Montagerahmen (46, 67) vormontierten Baueinheit (14) in die mit Isolation ausgestattete Karosserie (13) an einem Diagnose-Center (76) eine Endkontrolle der am Montagerahmnen vormontierten Teile durchgeführt wird.

10. Vorrichtung zur Durchführung des Verfahrens nach einem oder mehreren Ansprüche 6 bis 9, gekennzeichnet durch einen um eine Horizontalachse dreh- bzw. schwenkbar gelagerten Montagerahmen (46, 47), der an einem die Armaturentafel (16) übergreifenden, etwa parallel zur Armaturentafel gerichteten oberen Rahmenteil (50, 71) Befestigungselemente (51, 52, 75) trägt, die in schlitzförmige Öffnungen (53) an der Oberseite der Armaturentafel lösbar eingreifen, und der den die Lenkung (17, 18, 19) und die Schließplatte (24) beinhaltenden Bereich der Baueinheit untergreift.

11. Vorrichtung nach Anspruch 10, dadurch gekennzeichnet, daß der Montagerahmen (67) aus einem bügelartig verformten, die Seitenansicht etwa U-förmig gebogenen, geschlossenen Rohr besteht (Fig. 5 und 6).

12. Vorrichtung nach Anspruch 11 dadurch gekennzeichnet, daß der die Armaturentafel (16) im Bereich der Lenkung (19) und der Schließplatte (24) untergreifende U-Schenkel (68) des Montagerahmens (67) länger ausgebildet ist als der die Armaturentafel übergreifende andere U-Schenkel (69).

13. Verfahren nach Anspruch 7, dadurch gekennzeichnet, daß der Montagerahmnen (46) auf einer in Fahrzeugquerrichtung (61) verfahrbaren Einfahrschablone (59) um eine in Fahrzeugquerrichtung gerichtete Horizontalachse schwenkbar (bei 62) angeordnet ist (Fig. 4).

**Claims**

1. Preassembled module for the cockpit region of vehicles, in particular motor vehicles, which can be mounted inside the body (13) of the vehicle and essentially includes an instrument panel (16) including all fittings (21, 22, 23, 33, 34, 36) and electrical wiring (37, 38, 39), heating with controls and air distribution system (23), also a steering system with steering wheel (17), steering column casing (18) and steering bracket (20), as well as pedals (25, 26, 27) for clutch, brake and accelerator with pedal brackets (28, 29), characterised in that the module (14) is provided with a closure panel (24) which after installation of the module (14) seals an opening (30) provided in the dashboard (15) of the body (13), and which comprises apertures for Bowden cables (40, 41), cable harnesses (37, 38, 39) and the like as well as openings for the braking system and the steering aperture and that the closure panel (24) and the components (16, 20, 28, 36) of the module (14) are combined and fixed on a mounting frame (46, 67) prior to installation.

2. Module according to claim 1, characterised in that incorporated in the pattern of holes in the closure panel (24), which corresponds to the pattern of holes of the associated opening (30) in the dashboard (15), are weld screws (32) for mounting the pedal brackets (28, 29), which at the same time serve to fix the closure panel (24) to the dashboard (15).

3. Module according to claim 1 and 2, characterised in that the Bowden cables (40, 41) and the electrical cables (37, 38, 39) are connected to the individual components and fed through the closure panel (24) with grommets (43).

4. Module according to claim 1 to 3, characterised in that in front of the closure panel (24) on the mounting frame (46, 67) is mounted a removable cable box (45) in which the cables (40, 44) are laid rolled up and which is removed after insertion of the module (14).

5. Method for the manufacture and installation of the module according to claims 1 to 4, characterised in that the components (16, 20, 28, 36, 24) of the module (14) are combined and fixed relative to each other by means of a mounting frame (46, 67) which is preferably mounted rotatably, on a preassembly line, and the module is then moved into the passenger compartment through one of the front side door openings (10, 11) of the body (13) and bolted to the dashboard (15), in such a way that an opening (30) provided in the dashboard (15) is closed by a preassembled closure panel (24) incorporated in the module, by bolting, wherein all the bolts (32, 48) extend in the longitudinal direction of the vehicle and the module (14) is bolted to the dashboard (15) from the engine compartment (47).

6. Method according to claim 5, characterised in that the module (14) is moved into the body (13) manually by means of a feed positioning jig (59) or automatically by an automatic robot mechanism (77).

7. Method according to claim 6, characterised in that all components passing through the dashboard such as electrical cables (37, 38, 39, 44), Bowden cables (40, 41), pipes and the like are preassembled in the closure panel (24) and sealed off from the closure panel, wherein the electrical cables (38, 39, 44) and Bowden cables (40, 41) which are associated with the instrument panel (16) are fed through the closure panel (24) by means of grommets (43), and during preassembly of the module (14) the closure panel serves to support the pedal brackets (28, 29) with pedals (26, 27, 25).

8. Method according to claim 6 and 7, characterised in that the electrical cables (44) and Bowden cables (40) protruding from the closure panel (24) are rolled up and placed in a cable box (45) attached to the mounting frame (46) and that after insertion of the module (14) into the body (13), the cable box is removed.

9. Method according to one of the claims 6 to 8, characterised in that before the module (14), which is preassembled on the mounting frame (46, 67), is installed in the body (13) which is provided with insulation, the components preassembled on the mounting frame are finally inspected in a diagnostic centre (76).

10. Apparatus for carrying out the method according to one or more of the claims 6 to 9, characterised by a mounting frame (46, 67) which is rotatable or pivotable about a horizontal axis and which carries, on an upper frame member (50, 71) overlapping the instrument panel (16) and extending approximately parallel to the instrument panel, fastening elements (51, 52, 75) which engage releasably in slot-like openings (53) in the upper side of the instrument panel, which mounting frame (46, 67) passes beneath the region of the module containing the steering (17, 18, 19) and the closure panel (24).

11. Apparatus according to claim 10, characterised in that the mounting frame (67) consists of a closed tube shaped like a stirrup and bent approximately into a U-shape in side elevation (Fig. 5 and 6).

12. Apparatus according to claim 11, characterised in that the arm (68) of the U-shaped mounting (67) which passes beneath the instrument panel (16) in the region of the steering (19) and the closure panel (24), is longer than the other arm (69) which passes over the instrument panel.

13. Method according to claim 7, characterised in that the mounting frame (46) is mounted (at 62) on a feed positioning jig (59) movable in the transverse direction (61) of the vehicle, so as to be capable of pivoting about a horizontal axis extending in the transverse direction of the vehicle (Fig. 4).

## Revendications

1. Unité modulaire préassemblée pour la zone du poste de conduite de véhicules, en particulier de véhicues automobiles, laquelle peut être montée à l'intérieur de la carrosserie (13) du véhicule et comprend, pour l'essentiel, un tableau de bord (16), y compris tous les éléments incorporés (21, 22, 23, 33, 34, 36) et le câblage électrique (37, 38, 39), le chauffage avec dispositif d'actionnement et système de ventilation (23) et, en plus, une direction avec volant (17), l'habillage (18) du volant et le support de direction (20), ainsi que des pédales (25, 26, 27) et leurs supports (28, 29) pour l'embrayage, le frein et les gaz, *caractérisée* par le fait que l'unité modulaire (14) est pourvue d'une plaque de fermeture (24) qui, après la mise en place de l'élément modulaire (14), ferme une ouverture (30) prévue dans la paroi frontale (15) de la carrosserie (13) et qui comporte les traversées pour les câbles sous gaine (40, 41), les faisceaux de câbles (37, 38, 39) et analogues, ainsi que des orifices pour le système de freins et le passage de la direction, et par le fait que la plaque de fermeture (24) et les éléments (16, 20, 28, 36) de l'unité modulaire (14) sont assemblés et fixés sur un cadre de montage (46, 67) avant leur installation.

2. Unité modulaire selon la revendication 1, *caractérisée* par le fait que des vis à souder (32) qui sont prévues pour la fixation des supports (28, 29) des pédales et qui servent en même temps à la fixation de la plaque de fermeture (24) sur la paroi frontale (15), sont intégrées dans la configuration de perçage de la plaque de fermeture (24) qui correspond à la configuration de perçage de l'ouverture (30), y associée, de la paroi frontale (15).

3. Unité modulaire selon les revendications 1 et 2, *caractérisée* par le fait que les câbles sous gaine (40, 41) et les câbles électriques (37, 38, 39) sont raccordés aux différents éléments et passent à travers la plaque de fermeture (24) par des douilles d'étanchéité (43).

4. Unité modulaire selon les revendications 1 à 3, *caractérisée* par le fait que devant la plaque de fermeture (24), sur le cadre de montage (46, 47), est installée une boîte à câbles amovible (45) dans laquelle les câbles (40, 44) sont installés enroulés et qui est enlevée après la mise en place de l'unité modulaire (14).

5. Procédé de fabrication et de montage de l'unité modulaire selon les revendications 1 à 4, *caractérisé* par le fait que l' on groupe et que l'on fixe les uns aux autres les éléments (16, 20, 28, 36, 24) de l'unité modulaire (14) sur une ligne de préassemblage au moyen d'un cadre de montage (46, 67), de préférence monté rotatif, qu'on introduit ensuite l'unité modulaire dans l'habitacle du véhicule par l'une des ouvertures de portières latérales avant (10, 11) de la carrosserie (13) et qu'on la visse sur la paroi frontale (15), de manière qu'une ouverture (30), prévue dans la paroi frontale (15), soit fermée par le vissage d'une plaque de fermeture (24) préassemblée et intégrée à l'unité modulaire, toutes les vis (32, 48) étant orientées dans le sens longitudinal du véhicule et le vissage de l'unité modulaire (14) sur la paroi frontale (15) étant exécuté à partir du côté de l'enceinte (47) du moteur.

6. Procédé selon la revendication 5, *caractérisé* par le fait qu'on effectue l'introduction de l'unité modulaire (14) dans la carrosserie (13) à la main au moyen d'un gabarit de positionnement (59) ou automatiquement au moyen d'un robot (77).

7. Procédé selon la revendication 6, *caractérisé* par le fait que tous les organes traversant la paroi frontale, comme les câbles électriques (37, 38, 39, 44), les câbles sous gaine (40, 41), les fils et analogues, sont préassemblés dans la plaque de fermeture (24) et étanchés vis-à-vis de la plaque de fermeture, les câbles sous gaine (40, 41) et les câbles électriques (38, 39, 44) associés au tableau de bord (16) passant à travers la plaque de fermeture (24) au moyen de douilles d'étanchéité (43), et que la plaque de fermeture au cours du préassemblage de l'unité modulaire (14) sert au maintien des supports (28, 29) des pédales (26, 27, 25).

8. Procédé selon les revendications 6 et 7, *caractérisé* par le fait qu'on enroule les câbles électriques (44) et les câbles sous gaine (40) sortant de la plaque de fermeture (24), qu'on les dépose dans une boîte à câbles (45) qui est fixée sur le cadre de montage (46) et qu'on enlève la boîte à câbles après la mise en place de l'unité modulaire (14) dans la carrosserie (13).

9. Procédé selon l'une des revendications 6 à 8, *caractérisé* par le fait qu'avant de monter l'unité modulaire (14), préassemblée sur le cadre de montage (46, 47), dans la carrosserie (13) munie d'isolation, on effectue dans une installation de diagnostic (76) un contrôle final des éléments préassemblés sur le cadre de montage.

10. Dispositif pour la mise en oeuvre du procédé selon l'une ou plusieurs des revendications 6 à 9, *caractérisé* par un cadre de montage (46, 47) qui, monté rotatif ou pivotable autour d'un axe horizontal, porte des pièces de fixation (51, 52, 75), lesquelles, placées sur une partie supérieure (50, 71) saisissant le tableau de bord (16) par en-haut et disposée sensiblement parallèlement au tableau de bord du cadre, s'engagent de façon amovible dans des ouvertures (53) en forme de fentes pratiquées sur la face supérieure du tableau de bord, et qui saisit par en-dessous la zone de l'unité modulaire comprenant la direction (17, 18, 19) et la plaque de fermeture (24).

11. Dispositif selon la revendication 10, *caractérisé* par le fait que le cadre de montage (67) est constitué par un tube fermé, façonné en forme d'étrier et recourbé sensiblement en forme d'U en vue latérale (figures 5 et 6).

12. Dispositif selon la revendication 11, *caractérisé* par le fait que la branche (68) du cadre de montage (67) saisissant par en-dessous le tableau de bord (16) dans la zone de la direction (19) et de la plaque de fermeture (24), est réalisée plus longue que l'autre branche (69) saisissant le tableau de bord par en-haut.

13. Procédé selon la revendication 7, *caractérisé* par le fait que le cadre de montage (46), installé sur un gabarit de positionnement (59), déplaçable dans le sens transversal (61) du véhicule, est monté pivotable (en 62) autour d'un axe horizontal orienté dans le sens transversal du véhicule (figure 4).

FIG. 1

FIG.2

FIG.3

FIG.4

EP 0 081 656 B2

FIG.5

FIG.5c

FIG.5b

FIG.5a

EP 0 081 656 B2

FIG.6